# EUROPEAN PATENT APPLICATION

(11) **EP 1 367 399 A2**
(43) Date of publication of application: **03.12.2003**
(21) Application number: 03252542.0
(22) Date of filing: 23.04.2003
(51) Int. Cl.: G01N 35/02

(54) **Biochemical analysis method, apparatus and cartridge**

(30) Priority: 30.05.2002 JP 2002157029
(71) Applicant: Leisure, Inc., Shibuya-Ku, Tokyo (JP)
(72) Inventor: Arai, Takanori, c/o Leisure, Inc., Tokyo (JP); Nomura, Noriyuki, c/o Leisure, Inc., Tokyo (JP)
(74) Representative: Rackham, Stephen Neil

(57) **Abstract**

The present invention enables a lower cost, a smaller equipment size, and a simplified operation for analysis. The invention comprises the steps of tilting a container (29) containing a biological sample and ejecting the biological sample within the container (29) onto the central portion of a cartridge (33, Fig. 6) mounted on a turntable (21); rotating the turntable (21), exerting a centrifugal force upon the biological sample on the cartridge (33) and guiding the biological sample evenly into a plurality of reagent containing parts (41) arranged radially in the cartridge (33); and analyzing the biological sample after it is guided into each of the reagent containing parts (41) and mixed with a reagent (42,44) within each of the reagent containing parts (41).

## Description

The present invention relates to a method and an apparatus for mixing a biological sample such as blood with a predetermined reagent and conducting a biochemical analysis, and to a cartridge for the biochemical analysis.

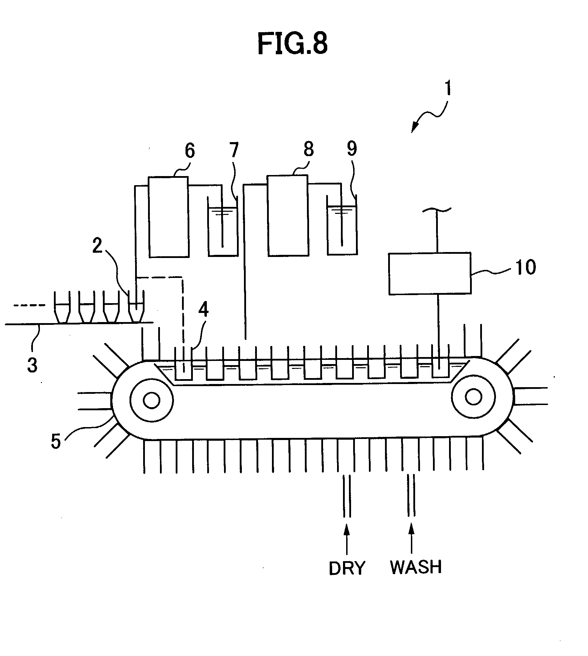

As a conventional biochemical analysis apparatus of this kind, a discrete type apparatus such as shown in Fig.8 is well known.

This discrete-type biochemical analysis apparatus 1 is generally comprised of a biological sample container retaining part 3 for holding biological sample containers 2, a reaction container retaining part 5 for holding reaction container s 4, a biological sample pipetter 6, a diluent solution bottle 7 for containing a diluent solution, a reagent pipetter 8, a reagent bottle 9 for containing a reagent, a photometer 10, and a washing/drying device (not shown).

In analyzing the biological sample in this arrangement, firstly, the diluent solution within the diluent solution bottle 7 is sucked by the biological sample pipetter 6 and mixed with the biological sample within the biological sample container 2 to dilute the biological sample and then this diluted biological sample is transferred into the reaction container 4. Secondly, the reagent within the reagent bottle 9 is dispensed in to the reaction container 4 by the reagent pipetter 8 and mixed with the biological sample to measure and analyze the absorbance of the biological sample by the photometer 10. Then, after completion of the analysis, the biological sample within the reaction container 4 is discarded and the reaction container 4 is washed and dried by the washing/drying device. Subsequently, the analysis is conducted in turn in the same manner for other biological samples.

However, the conventional biochemical analysis method and the apparatus used therein as described above has required the pipetters 6, 8 for diluting the biological sample or adding the reagent into the biological sample, and the washing/drying device for washing and drying the reaction container 4 after completion of the analysis. Thus, there has been a problem in that the operation of biochemical analysis is troublesome and the biochemical analysis apparatus becomes complex and large.

Further, since only the biological sample is made to be discarded after completion of the analysis, the biological sample needs to be chemically treated for discharging as a wastewater, which has caused a problem of increasing the cost of wastewater treatment.

The present invention is made to solve these problems and provides a biochemical analysis method and an apparatus used therein as well as a cartridge for biochemical analysis, which enable a lower cost, a smaller equipment size, and a simplified operation for analysis.

The present invention comprises the steps of tilting a container containing a biological sample and ejecting the biological sample within the container onto the central portion of a cartridge mounted on a turntable; rotating the turntable, exerting a centrifugal force upon the biological sample on the cartridge, and guiding the biological sample evenly into a plurality of reagent containing parts arranged radially in the cartridge; and analyzing the biological sample after it is guided into each of the reagent containing parts and mixed with a reagent therein.

Preferably, the present invention further comprises the step of guiding the biological sample, which is ejected onto the cartridge having a plurality of pairs of first reagent containing part and second reagent containing part separated vertically by means of a pair of films, into each first reagent containing part to mix with a first reagent and, after analyzing the biological sample, pressing the cartridge from above, rupturing the pair of films by a cutter provided between the first reagent containing part and the second reagent containing part while coupling the first reagent containing part and the second reagent containing part, mixing the biological sample with a second reagent, and analyzing the biological sample.

Also, the present invention further comprises the step of removing the analyzed cartridge from the turntable and mounting another cartridge to be analyzed next on the turntable.

Further, the present invention comprises the step of moving a container retaining part, which holds a predetermined number of the containers, along the tangential direction of the turntable and stopping the container retaining part when the container containing the biological sample to be analyzed next comes to confront the turntable.

Furthermore, the present invention comprises the step of injecting air into the tilted container and ejecting the biological sample within the container onto the cartridge.

Further, the present invention comprises the step of moving the container retaining part, which holds the predetermined number of the containers, along the tangential direction of the turntable and discarding the container emptied by ejection of the biological sample into a container disposal unit.

Also, the present invention comprises a turntable capable of mounting a cartridge thereon, the cartridge having a predetermined number of reagent containing parts arranged radially therein each containing a reagent; a biological sample ejecting mechanism part that tilts a container and ejects a biochemical sample within the container onto the central portion of the cartridge; a turntable control part that rotates the turntable, exerts a centrifugal force upon the biological sample on the cartridge, and guides the biological sample evenly into each of the reagent containing parts; and a measuring unit that mixes the biological sample with the reagent within each of the reagent containing parts and performs analysis on predetermined items.

Preferably, the present invention further comprises a container retaining part provided movably along the tangential direction of the turntable and capable of retaining a predetermined number of containers each containing the biological sample.

Also, the present invention further comprises a pressurizing part that presses the cartridge from above, wherein each of the reagent containing parts of the cartridge is separated vertically into a first reagent containing part and a second reagent containing part by means of a pair of films, the first reagent containing part and the second reagent containing part containing a first reagent and a second reagent respectively, a coupling part is provided between the first reagent containing part and the second reagent containing part, the coupling part having a cutter, and after the biological sample ejected onto the cartridge is guided into the first reagent containing part, mixed with the first reagent, and analyzed, the pair of films are ruptured by the cutter when the cartridge is pressed from above by the pressurizing part, while the first reagent containing part and the second reagent containing part are coupled by the coupling part and the biological sample is mixed with the second reagent and analyzed.

Further, the present invention is constructed such that the cartridge has an annular protruded part formed between the central portion thereof and the reagent containing parts, the protruded part having a plurality of cutting parts formed therein to communicate the central portion with the reagent containing parts, and the biological sample ejected onto the central portion is guided through the cutting parts into the reagent containing parts.

Furthermore, the present invention comprises a cartridge storing unit capable of storing a predetermined number of the cartridges and a cartridge disposal unit capable of containing analyzed ones of the cartridges, wherein the analyzed cartridge is removed from the turntable and discarded into the cartridge disposal unit, and another cartridge to be analyzed next is mounted onto the turntable from the cartridge storing unit.

Also, the biological sample ejecting mechanism part comprises an air gun that injects air into the tilted container.

Further, the present invention comprises a biological sample ejecting region provided in the central portion of the cartridge, and a plurality of reagent containing parts provided in the periphery of the biological sample ejecting region and communicating with the biological sample ejecting region; wherein the reagent containing part is separated vertically into a first reagent containing part and a second reagent containing part by means of a pair of films, the first reagent containing part and the second reagent containing part containing a first reagent and a second reagent respectively, a coupling part is provided between the first reagent containing part and the second reagent containing part, the coupling part having a cutter, and when pressed from above, the pair of films are ruptured by the cutter while the first reagent containing part and the second reagent containing part are coupled by the coupling part.

Preferably, the present invention comprises an annular protruded part formed between the biological sample ejecting region and the reagent containing parts, the protruded part having a plurality of cutting parts formed therein to communicate the biological sample ejecting region with the reagent containing parts.

Also, the protruded part is formed in two protruded parts, and the cutting parts for each of the protruded parts are arranged evenly such that the cutting parts of one protruded part are not aligned in a same radial direction with the cutting parts of the other protruded part.

Then, the construction of the present invention described above enables to provide for a simplified analysis operation and a smaller analysis apparatus, as well as reduction of the disposal cost.

A particular embodiment will now be described with reference to the accompanying drawings; in which:-
Fig.1 is a plan view of a biochemical analysis apparatus according to an embodiment of the present invention;
Fig.2 is a front view of the biochemical analysis apparatus according to the embodiment of the present invention;
Fig.3 is a side view of the biochemical analysis apparatus according to the embodiment of the present invention;
Fig.4 is a schematic explanatory view illustrating the construction of a cartridge storing unit in the embodiment of the present invention;
Fig.5 is the plan view of a cartridge in the embodiment of the present invention;
Fig.6 is a cross-sectional view of Fig.7 taken along the line A-A;
Fig.7 is the cross-sectional view of Fig.6 taken along the line B-B; and
Fig.8 is a schematic constructional view of a conventional example.

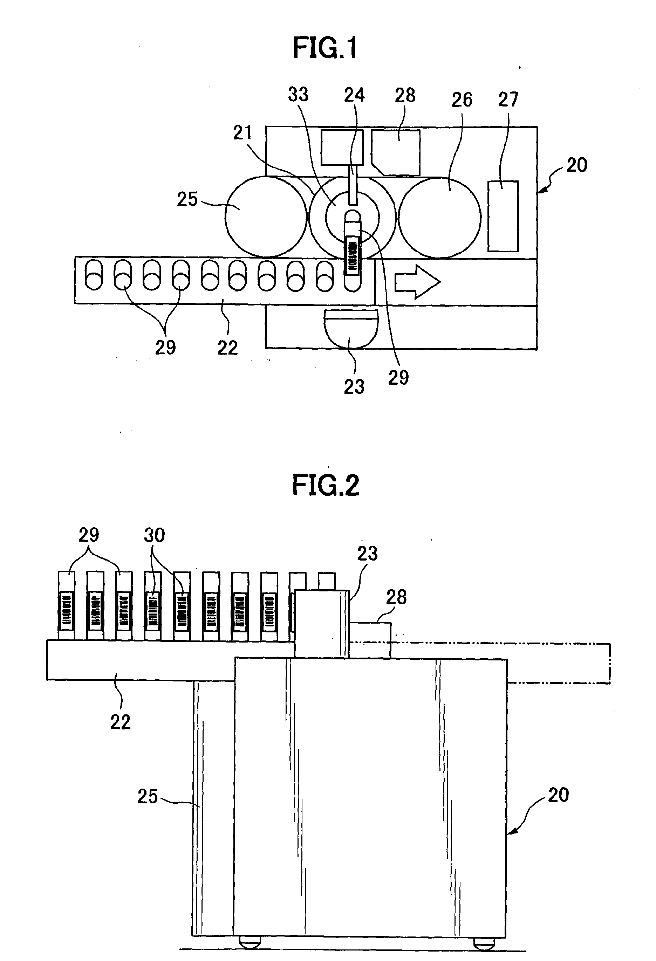

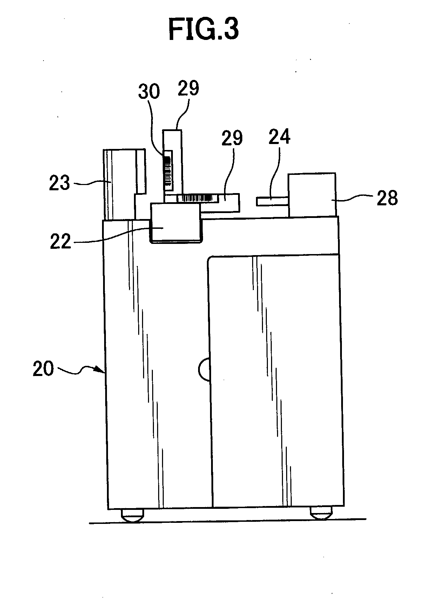

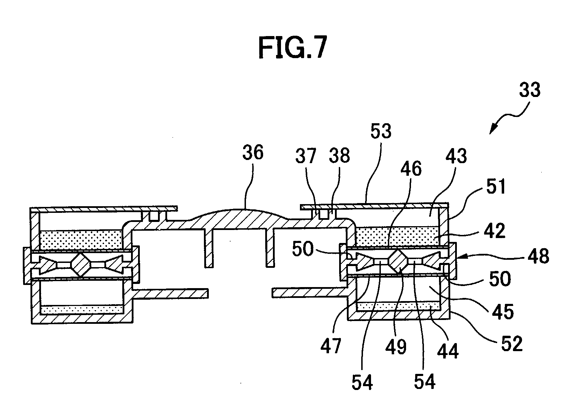

Figs.1-7 illustrate a biochemical analysis apparatus 20 according to an embodiment of the present invention, which will be described below for an exemplary case where a serum is used as a biological sample.

The biochemical analysis apparatus 20 comprises a turntable 21, a container retaining part 22 provided to be lineally movable along the tangential direction of the turntable 21, a barcode reading part 23 arranged in the opposite side of the turntable 21 across the container retaining part 22, an air gun 24 arranged in the opposite side of the container retaining part 22 across the turntable 21, a cartridge storing unit 25 provided in proximity to the side of the turntable 21, a cartridge disposal unit 26 arranged in the opposite side of the cartridge storing unit 25 across the turntable 21, a container disposal unit 27 arranged beside the cartridge disposal unit 26, a measuring unit 28 arranged in proximity to the turntable 21, and a pressuri zing part (not shown) provided above the turntable 21, wherein rotation of the turntable is controlled by a turntable control part (not shown).

The container retaining part 22 forms a shape of laterally elongated box and is configured to be capable of retaining a predetermined number of containers 29 in an erected condition (10 containers in Fig.1 and Fig.2), wherein the outer surface of the container 29 has a barcode 30 attached thereto. Preferably, a cylindrical body for containing serums separated by a biological sample separating apparatus according to a co-pending Japanese Patent Application No. 2002-74616 by the present inventor is used for the container 29. In that case, since the serums within the cylindrical body are diluted beforehand by a diluent solution, there is no need for the biochemical analysis apparatus 20 to be provided with a mechanism for adding the diluent solution into the serums, thereby enabling a simpler and smaller apparatus to be provided. Also, since the cylindrical body can be placed directly in the container retaining part 22, there is no need for the diluted serums within the cylindrical body to be transferred into another container, thereby enabling an improvement in working efficiency and reduction of the blood to be collected to a minute amount. Further, enabling the reduction of the blood to be collected to the minute amount also allows the blood collection to be conducted by a patient himself instead of an expert such as a doctor.

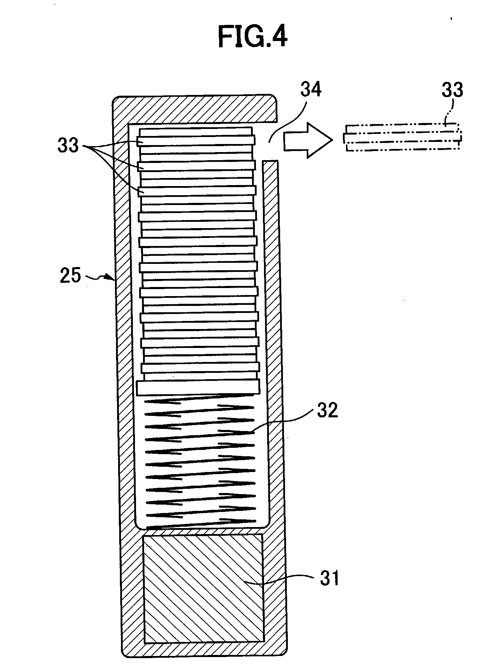

As best shown in Fig. 4, the cartridge storing unit 25 forms a shape of longitudinally elongated cylindrical box and contains cold-reserving equipment 31 in a lower part thereof, wherein a predetermined number of cartridges 33 (10 cartridges in Fig.4) are stacked above the cold-reserving equipment 31 via a cartridge lifting equipment 32. The cartridge storing unit 25 also has a n opening at the upper side surface thereof as a cartridge output port 34.

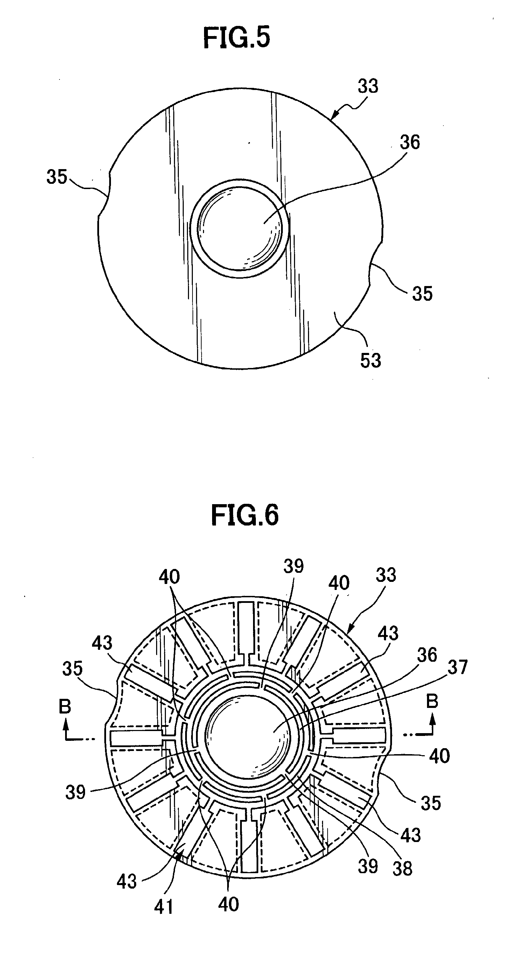

As best shown in Figs. 5-7, the cartridge 33 has a generally circular plane and is adapted to be stored in alignment within the cartridge storing unit 25 by a pair of recesses 35 formed on a circumferential side surface thereof. Also, the top surface of the cartridge 33 has a raised part 36 formed in the central portion thereof, and a first and a second annular protruded parts 37, 38 respectively are formed concentrically around the raised part 36. The first and second protruded parts 37, 38 have a predetermined number of a first and a second cutting parts 39, 40 respectively formed radially therein (3 cutting parts in the first protruded part 37 and 6 in the second protruded part 38 in Fig.6) by which the raised part 36 is communicated with the outer periphery of the second protruded part 38, and the first cutting part 39 and the second cutting part 40 are evenly arranged such that they are not aligned in a same radial direction.

Further, the cartridge 33 has a predetermined number of reagent containing parts 41 (12 containing pats in Fig.6) disposed radially around the second protruded part 38, and the reagent containing part 41 is divided vertically into a first reagent containing part 43 for containing a first reagent 42 and a second reagent containing part 45 for containing a second reagent 44. Then, the bottom surface of the first reagent containing part 43 and the top surface of the second reagent containing part 45 are formed of a first and a second films 46, 47 respectively, and a coupling part 48 is provided between the first and the second films 46, 47. The coupling part 48 comprises a cutter 49, a pair of mating grooves 50 formed respectively on each side of the cutter 49, and a pair of passage holes 54 perforated respectively between the cutter 49 and each of the mating grooves 50, wherein the first reagent containing part 43 and the second reagent containing 44 are adapted to be coupled by side walls 51, 52 of the first and second reagent containing parts 43, 45 respectively being fitted into the pair of mating grooves 50. In addition, a film 53 is attached on the top surface of the cartridge 33 excluding the raised part 36.

The operation of the biochemical analysis apparatus 20 will now be described.

The container retaining part 22 holding 10 pieces of the container 29 that contains the diluted serums is moved laterally (rightward in Fig.1 and Fig.2) until the first container 29 (the rightmost container in Fig.1 and Fig.2) comes to confront the turntable 21 where the container retaining part 22 is stopped. After the barcode reading part 23 reads the barcode 30 of the container 29, the container 29 is tilted toward the turntable 21 while the cartridge 33 is moved from the cartridge storing unit 25 to the turntable 21 and locked thereon. When the container 29 is tilted by 90 degrees or more, the air gun 24 injects air toward the inside of the container 29 so that the serums within the container 29 is ejected onto the raised part 36 of the cartridge 33 by the injection pressure.

Once the serums are ejected onto the raised part 36, the turntable 21 rotates at a high speed under the control of the turntable control part (not shown) and the centrifugal force acting on the serums moves them along the top surface of the turntable 21 toward the outer periphery thereof. Subsequently, the serums pass through the first cutting part 39, between the first protruded part 37 and the second protruded part 38, and through the second cutting part 40 in turn, until the serums are guided into each of the first reagent containing part 43 to mix with the first reagent 42. At this moment, since the first and second cutting parts 39, 40 are arranged evenly such that they are not aligned in a same radial direction, the serums are evenly delivered to each of the first reagent containing parts 43. Then, the turntable 21 is rotated by a predetermined angle (30 degrees in this case) at a time by the turntable control part and the measuring unit 28 performs the analysis on the predetermined items (12 items in this case). Once the analysis on the serums within the first reagent containing part 43 is completed, the cartridge 33 is pressed from above by the pressuri zing part (not shown) so that the first and second films 46, 47 are ruptured by the cutter 49 while the side walls 51, 52 are fitted into the mating grooves 50 to couple the first reagent containing part 43 and the second reagent containing part 45. This allows the serums to be received into the second reagent containing part 45 through the passage holes 54 and mixed with the second reagent 44. Then, the turntable 21 is rotated again by 30 degrees at a time, and the measuring unit 28 performs the analysis on the 12 items for the serums within each of the second reagent containing parts 45.

Once all the analyses on the serums contained in each of the second reagent containing parts 45 are completed, the cartridge 33 is removed from the turntable 21 to be discarded and stored in the cartridge disposal unit 26. Also, the container 29 that has been emptied by ejection of the serums is moved, after it is returned to the previous erected condition, by the container retaining part 22 to the position where it confronts the container disposal unit 27 and where it is discarded and stored in the container disposal unit 27.

Subsequently, the serums contained in other containers 29 are analyzed similarly and, once the analyses on the serums within all containers 29 (10 containers in this case) are completed, another set of containers 29 containing new serums are placed in the container retaining part 22 while a new set of cartridges 33 are placed in the cartridge storing unit 25, and the analyses are conducted according to the same procedure as described above.

It is noted that, although in the above embodiment the case of using the serum as the biological sample has been described, the present invention is also applicable to other biological samples than the serum, such as urine, feces, pleural effusion, ascites, saliva, and the like, and adaptable to not only an infectious disease but also a special examination by altering the type of the reagent within the reagent containing part 41 of the cartridge 33 .

According to the present invention as described above, the mechanism for adding the reagent is not required since the reagent is contained beforehand in the cartridge, and also a washing/drying device for the container is not required since the container for containing the biological sample is disposable. Thus, the present invention enables a simplified analysis operation and a smaller analysis apparatus to be provided.

Furthermore, since the cartridge is adapted to be discarded with the analyzed biological sample and reagent remaining within the cartridge, it becomes possible for the cartridge to be burnt out, which can provide for reduction of the disposal cost.

### DESCRIPTION OF THE REFERENCE NUMBERS

20: biochemical analysis apparatus
21: turntable
22: container retaining part
24: air gun
25: cartridge storing unit
26: cartridge disposal unit
28: measuring unit
29: container
33: cartridge
37: first protruded part
38: second protruded part
39: first cutting part
40: second cutting part
41: reagent containing part
42: first reagent
43: first reagent containing part
44: second reagent
45: second reagent containing part
46: first film
48: coupling part
49: cutter

## Claims

1. A biochemical analysis method, comprising the steps of:
tilting a container containing a biological sample and ejecting the biological sample within said container onto the central portion of a cartridge mounted on a turntable;
rotating said turntable, exerting a centrifugal force upon the biological sample on said cartridge, and guiding said biological sample evenly into a plurality of reagent containing parts arranged radially in said cartridge; and
analyzing the biological sample after it is guided into each of said reagent containing parts and mixed with a reagent within each of said reagent containing parts.

2. The biochemical analysis method according to Claim 1, further comprising the step of guiding the biological sample, which is ejected onto the cartridge having a plurality of pairs of first reagent containing part and second reagent containing part separated vertically by means of a pair of films, into each of said first reagent containing parts to mix with a first reagent and, after analyzing the biological sample, pressing said cartridge from above, rupturing said pair of films by a cutter provided between said first reagent containing part and said second reagent containing part while coupling said first reagent containing part and said second reagent containing part, mixing said biological sample with a second reagent, and analyzing the biological sample.

3. The biochemical analysis method according to Claim 1 or 2, further comprising the step of removing the analyzed cartridge from said turntable and mounting another cartridge to be analyzed next on said turntable.

4. The biochemical analysis method according to any one of Claims 1 to 3, further comprising the step of moving a container retaining part, which holds a predetermined number of said containers, along the tangential direction of said turntable and stopping said container retaining part when the container containing the biological sample to be analyzed next comes to confront said turntable.

5. The biochemical analysis method according to any one of Claims 1 to 4, further comprising the step of injecting air into said tilted container and ejecting the biological sample within the container onto said cartridge.

6. The biochemical analysis method according to any one of Claims 1 to 5, further comprising the step of moving the container retaining part, which holds the predetermined number of said containers, along the tangential direction of said turntable and discarding the container emptied by ejection of said biological sample into a container disposal unit.

7. A biochemical analysis apparatus, comprising:
a turntable capable of mounting a cartridge thereon, said cartridge having a predetermined number of reagent containing parts arranged radially therein each containing a reagent;
a biological sample ejecting mechanism part that tilts a container and ejects a biochemical sample within said container onto the central portion of said cartridge;
a turntable control part that rotates said turntable, exerts a centrifugal force upon the biological sample on said cartridge, and guides said biological sample evenly into each of said reagent containing parts; and
a measuring unit that mixes said biological sample with the reagent within each of said reagent containing parts and performs analysis on predetermined items.

8. The biochemical analysis apparatus according to Claim 7, further comprising a container retaining part provided movably along the tangential direction of said turntable and capable of retaining a predetermined number of containers each containing the biological sample.

9. The biochemical analysis apparatus according to Claim 8, further comprising a pressurizing part that presses said cartridge from above, and
wherein each of the reagent containing parts of said cartridge is separated vertically into a first reagent containing part and a second reagent containing part by means of a pair of films, said first reagent containing part and said second reagent containing part containing a first reagent and a second reagent respectively, a coupling part is provided between said first reagent containing part and said second reagent containing part, said coupling part having a cutter, and after the biological sample ejected onto said cartridge is guided into said first reagent containing part, mixed with the first reagent, and analyzed, said pair of films are ruptured by said cutter when said cartridge is pressed from above by said pressurizing part, while said first reagent containing part and said second reagent containing part are coupled by said coupling part and said biological sample is mixed with the second reagent and analyzed.

10. The biochemical analysis apparatus according to any one of Claims 7 to 9, wherein said cartridge has an annular protruded part formed between the central portion thereof and said reagent containing parts, said protruded part having a plurality of cutting parts formed therein to communicate said central portion with said reagent containing parts, and the biological sample ejected onto said central portion is guided through said cutting parts into said reagent containing parts.

11. The biochemical analysis apparatus according to any one of Claims 7 to 10, further comprising a cartridge storing unit capable of storing a predetermined number of said cartridges and a cartridge disposal unit capable of containing analyzed ones of said cartridges, and wherein the analyzed cartridge is removed from said turntable and discarded into said cartridge disposal unit, and another cartridge to be analyzed next is mounted onto said turntable from said cartridge storing unit.

12. The biochemical analysis apparatus according to any one of Claims 7 to 11, wherein said biological sample ejecting mechanism part comprises an air gun that injects air into said tilted container.

13. A cartridge for biochemical analysis, comprising:
a biological sample ejecting region provided in the central portion of said cartridge; and
a plurality of reagent containing parts provided in the periphery of said biological sample ejecting region and communicating with the biological sample ejecting region;
wherein said reagent containing part is separated vertically into a first reagent containing part and a second reagent containing part by means of a pair of films, said first reagent containing part and said second reagent containing part containing a first reagent and a second reagent respectively, a coupling part is provided between said first reagent containing part and said second reagent containing part, said coupling part having a cutter, and when pressed from above, said pair of films are ruptured by said cutter while said first reagent containing part and said second reagent containing part are coupled by said coupling part.

14. The cartridge for biochemical analysis according to Claim 13, further comprising an annular protruded part formed between said biological sample ejecting region and said reagent containing parts, said protruded part having a plurality of cutting parts formed therein to communicate said biological sample ejecting region with said reagent containing parts.

15. The cartridge for biochemical analysis according to Claim 14, wherein said protruded part is formed in two protruded parts and the cutting parts for each of said protruded parts are arranged evenly such that the cutting parts of one protruded part are not aligned in a same radial direction with the cutting parts of the other protruded part.
